Europäisches Patentamt

(19) European Patent Office

Office européen des brevets

(11) Publication number: **0 009 824**

A1

# EUROPEAN PATENT APPLICATION

(21) Application number: 79103875.5

(22) Date of filing: 10.10.79

(51) Int. Cl.³: **H 04 L 11/20**

(30) Priority: 11.10.78 IT 6934378

(43) Date of publication of application:
16.04.80 Bulletin 80/8

(84) Designated Contracting States:
DE FR GB

(71) Applicant: CSELT Centro Studi e Laboratori
Telecomunicazioni S.p.A.
Via Guglielmo Reiss Romoli, 274
I-10148 Turin(IT)

(72) Inventor: Tamburelli, Giovanni
Str. com. Val San Martino 81/5
Torino(IT)

(74) Representative: Freiherr Riederer von Paar zu Schönau,
Anton et al,
Müllerstrasse 31
D-8000 München 5(DE)

(54) Packet-switched communication system.

(57) The packet-switched communication system applied to a connecting network comprises one or a plurality of nodes in each of which the packet transfer from one connection to the next one is effected by means of ring recirculating memories, within which all the packets arrived at the node from and transferred to any one of said connections are made to recirculate while waiting to be routed again.

Fig 1

*Patentanwalt*

*Dipl.-Ing. Anton Freiherr* Riederer von Paar

Frhr. Riederer v. Paar, Müllerstr. 31, D-8000 Munchen 5

Müllerstraße 31
D-8000 München 5

☎ München (089) 26 60 60

Telex 523 903 claim d
✝ claims München

0009824

Konten:
Bayerische Vereinsbank München 563 390 (BLZ 700 202 70)
Gemeindesparkasse Gauting 624 072 (BLZ 700 560 90)
Postscheckkonto Munchen 1921 39-809 (BLZ 700 100 80)

CSELT
Centro Studi e Laboratori
Telecomunicazioni S.p.A.
Via Guglielmo Reiss Romoli, 274
I-10148 Torino, Italy

Datum 10th Oct., 1979

PACKET-SWITCHED COMMUNICATION SYSTEM

The present invention relates to communication systems and more particularly it concerns a packet-switched communication system.

As known, the principle on which packet-switching relies consists in the establishment of the connection only during the time in which there is a message to be transmitted, in contrast with traditional switching technology entailing permanent seizure of a line during the whole time in which the connection is established.

To effect this new switching method, the information is grouped into blocks, the so called packets; they contain furthermore the destination addres so that the switching operation designed to establish the connection takes place for each packet and only for the time period necessary for the packet to be transferred.

As a consequence the packet-switching network must perform on the packets a number of operations, such as storage of same into the nodes involved in the connection with subsequent waiting in queues of the packets to be transferred over long-distance lines, which in such a way can be used contemporarily by several subscribers.

The nodes of a packet-switching network generally consist of computers able to carry out, in addition to traffic-control and switching operations, also interfacing operations towards local networks.

As a consequence, said computers are not only complex themselves but are also inserted in a complex connecting network what entails high costs and insufficient reliability.

In addition, said nodes realised according to the traditional technology require a lot of buffers for the arriving packets, with consequent higher installation and mainteinance costs.

These and other disadvantages are overcome by the present invention of a packet-switched communication system wherein the nodes basically consist of recirculating memories of any known type, provided they have the required properties, so achieving a considerable simplification of the connecting network of the node as well as of the control computer of the same.

It is the main objeet of the present invention a packet-switched communication system applied to a connecting network comprising one or a plurality of nodes, in which, in each one of said nodes, the packet transfer from one connection to the next one is effected by means of ring recirculating-memories, within which all the packets arrived at the node from and transferred to any one of said connections are made to recirculate while waiting to be routed again.

The characteristics of the present invention will become clearer from the following description of a particular embodiment of the same, given by way of example and not in a limiting sense, taken in connection with the annexed drawings in which.

- Fig. 1 is the general schematic representation of a node with recirculating memory, according to the invention.

- Fig. 2 is a basic scheme of a node according to the invention, that utilizes as recirculating memory a charge transfer memory of the type generally known as CCD memory.

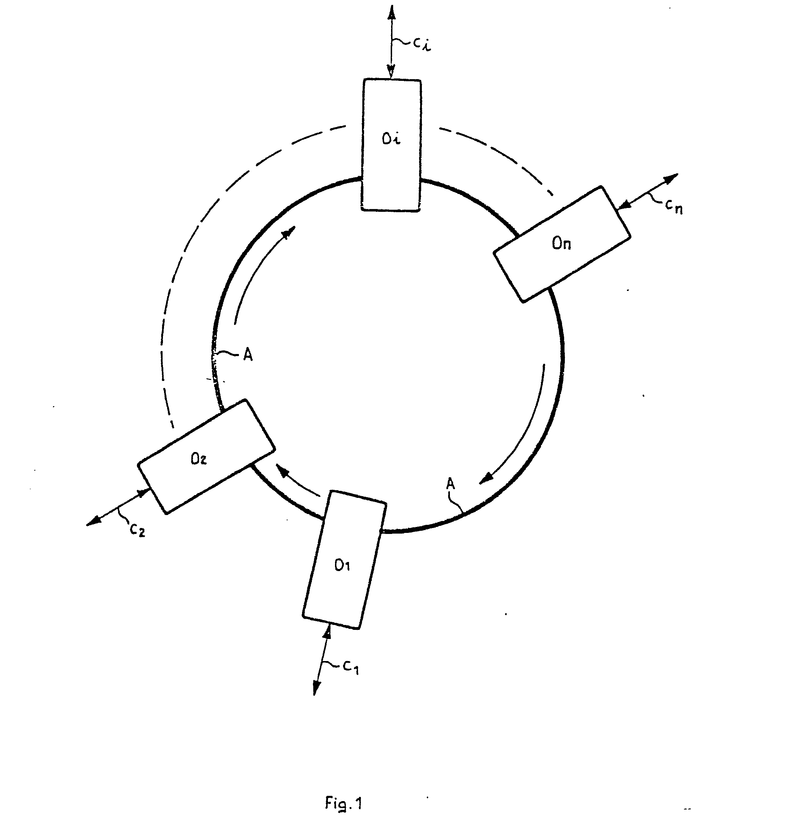

In Fig. 1 references $0_1$, $0_2$, . . ., $0_i$ . . . $0_n$ generally denote n bidirectional line terminals (stations) of known type connected as shown in the drawing; said stations are connected to the other nodes of the network through their respective bidirectional connections $c_1$, $c_2$, . . ., $c_i$, . . . , $c_n$.

Reference A generally denotes a ring recirculating memory of any known type interconnecting and in part constituting said stations $0_1$ . . . $0_n$.

According to well known technologies, each of said station 0 can extract from its connection c an arriving packet, can store it temporarily, and forwards it, at the suitable instant, into recirculating memory A; vice-versa it can extract from said recirculating memory A a packet destined to itself, store it temporarily and forward it at the suitable instant along its connection c towards another station.

The packets forwarded into the recirculating memory A from various bidirectional stations 0 travel through A in serial sequence according to a predetermined direction, for instance clockwise, as shown in the drawing.

The packets recirculate on A till one of the stations 0 recognizes them as belonging to itself and stores them into its buffer; in this way. A acts also as a buffer for the node.

Obviously the nature of stations 0 will depend on the type of recirculating memory chosen for A.

In a particular application of the present invention a recirculating memory A may consist of a ring of suitable length, made of optical fibre; in this case stations c will be of a kind able to extract and launch signals into an optical fibre.

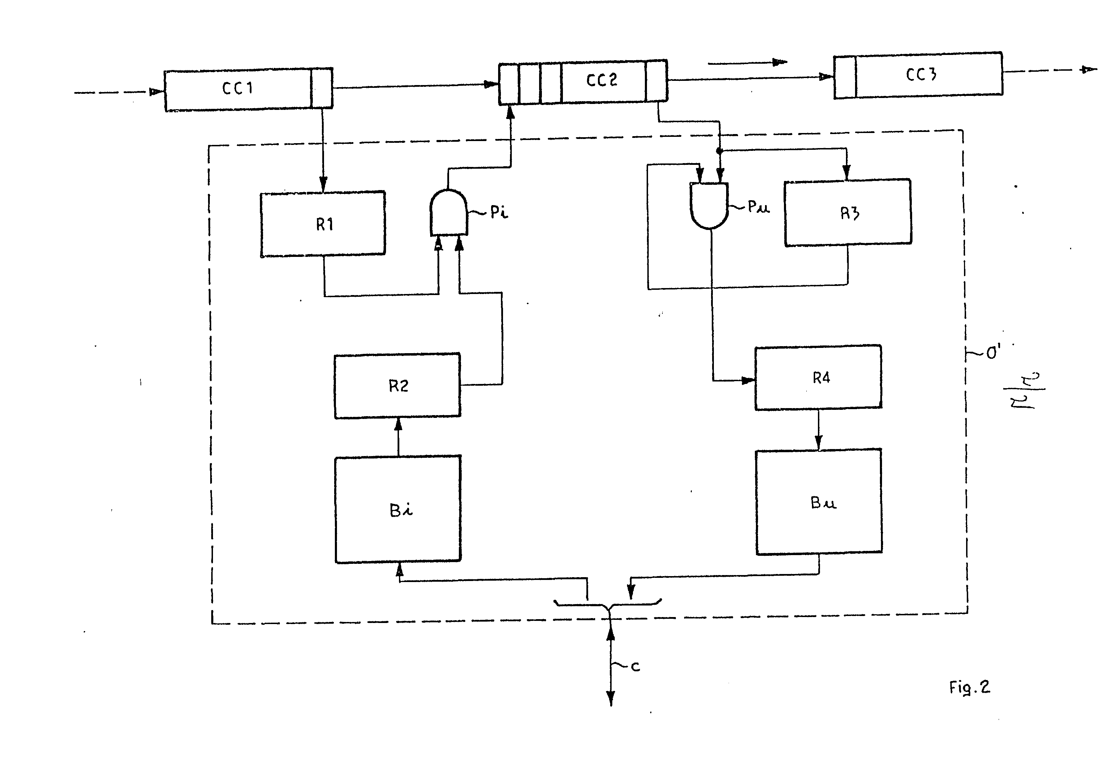

In Fig. 2, references CC 1, CC 2, CC 3, denote three recirculating memories of the charge transfer type (CCD) connected in cascade and forming a portion of a ring, like the one denoted by A in Fig. 1.

Reference 0' (Fig. 2) denotes a station of the type denoted by 01 . . . 0n in Fig. 1; in the particular example of Fig. 2, as the recirculating memory is of kind CCD, station 0 for instance consists, as shown in the drawing, of four shift registers denoted by references R1, R2, R3, R4, of two usual logic gates denoted by references P1 and P2, and finally of two buffers of any known type denoted by Bi and Bn.

It is known in the technique the working operation of the circuit of Fig. 2 for the operations relative to the extraction of information (in our invention of information packets) from memory CC to be sent over connection c and vice-versa, for the transfer of information from connection c into memories CC relating to recirculating memory A (Fig. 1).

In the same way it is usual and very simple tecnique to make the information continuously recirculate along the ring of said recirculating memory A.

However, the operation of a station like the one denoted by 0' in Fig. 2 is here briefly summarised.

An information packet present on connection c is orderly stored in buffer Bi, together orderly with other packets that may have been previously received.

The first packet designed to be forwarded according to the pre-determined alternating criterion, is transferred in parallel onto register R2. Register R1 is designed to receive a possible information bit present on the last location of memory CC1; if said location is empty, also the first location of memory CC2, at the subsequent instant, will remain empty; in this case the signal outgoing from R1 causes the opening of gate P1 and the bit-by-bit transfer into memory CC2 of the information stored in register R2.

Vice-versa, if register R3 recognizes that the possible information bit present on the last location of memory CC2 relates to station 0' in which R2 is inserted, it determines by its output signal the opening of gate Pu with consequent serial transfer into register R4 of the bits stored in CC2. From R4 the bits relating to a packet are transferred in parallel to buffer Bu and therefrom, according to the predetermined alternating criterion, onto connection c towards the further nodes of the network or towards other destination points.

It is clear that what described has been given only by way of nonlimiting example and that variations and modifications are possible, without going out of the scope of the invention.

PATENT CLAIMS

1. Packet-switched communication system applied to a connecting network comprising one or a plurality of nodes, characterized in that in each one of said nodes the packet transfer from one connection to the next one is effected by means of ring recirculating memories, within which all the packets arrived at the node from and transferred to any one of said connections are made to recirculate while waiting to be routed again.

2. Packet-switched communication system according to claim 1, characterized in that said recirculating memories consist of optical-fibre rings.

3. Packet-switched communication system according to the previous claims, characterized in that said recirculating memories consist of a ring connected sequence of charge transfer memories.

4. Packet-switched communication system according to the previous claims, basically as described in the text and depicted in the annexed drawings.

0009824

Fig. 1

0009824

Fig.2

**EUROPEAN SEARCH REPORT**

0009824

Application number

EP 79 10 3875

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | FR - A - 2 315 725 (R.T.C. LA RA-DIOTECHNIQUE-COMPELEC) <br><br> * Page 3, lines 20-27; page 4, line 7 - page 5, line 13; claims 1,5; figure 1 * <br><br> -- | 1,2 | H 04 L 11/20 |
| | US - A - 3 725 362 (ASHANY) <br><br> * Column 2, line 8 - column 4, line 30; column 4, line 65 - column 5, line 27; figures 1, 3,5 * <br><br> -- | 1 | |
| | IBM TECHNICAL DISCLOSURE BULLETIN, vol. 19, no. 3, August 1976, pages 1114,1115 New York, U.S.A. D.M. TAUB: "Communication System Using Time-Division-Multiplex" <br><br> * In its entirety * <br><br> -- | 1,3 | TECHNICAL FIELDS SEARCHED (Int.Cl. 3) <br><br> H 04 L 11/20 <br> 11/16 <br> G 11 C 19/28 |
| | FR - A - 2 360 153 (MOTOROLA) <br><br> * Page 1, lines 24-38; page 2, line 20 - page 4, line 21; figure 1 * <br><br> ---- | 3 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| ☒ | The present search report has been drawn up for all claims | |
| Place of search <br> The Hague | Date of completion of the search <br> 14-01-1980 | Examiner <br> WANZEELE |

EPO Form 1503.1 06.78